# Europäisches Patentamt
# European Patent Office
## Office européen des brevets

(11) Publication number: **0 215 996 B1**

(12) EUROPEAN PATENT SPECIFICATION

(45) Date of publication of the patent specification: 28.06.89

(21) Application number: **85830245.8**

(22) Date of filing: **27.09.85**

(51) Int. Cl.⁴: **B65G 57/18**, B65G 57/081, B65B 5/10

(54) Apparatus for overturning and feeding strips of staples forming them in groups.

(43) Date of publication of application: 01.04.87 Bulletin 87/14

(45) Publication of the grant of the patent: 28.06.89 Bulletin 89/26

(84) Designated Contracting States: CH DE FR GB IT LI

(56) References cited:
FR-A- 1 269 904
FR-A- 2 124 221
GB-A- 1 125 385

(73) Proprietor: ITALPUNTI MACCHINE S.N.C. DI SARTI FRANCO & C., Via Calari, 18, I-40069 Zola Predosa Bo(IT)

(72) Inventor: Sarti, Franco, Via del Vivaio 17/2, I-40132 Bologna(IT)

(74) Representative: Lanzoni, Luciano, c/o BUGNION S.p.A. Via Farini, 37, I-40124 Bologna(IT)

ACTORUM AG

## Description

The present invention relates to an apparatus for overturning and feeding strips of staples forming them in groups.

In the technical field of the machines for the production and packing of staples, several machines adapted to produce continuous bands of staples are already known. These continuous bands are then divided into many individual strips each of them having the same length and therefore being provided with the same number of staples. Afterwards these staple strips are manually removed and coupled in a mirror but offset relationship so that the height of two thus coupled strips is equal to that of one strip only with the addition of the thickness of the base surface of the second strip. Once they are coupled, the pairs of staple strips are gathered in groups and introduced into their respective packing.

The object of the present invention is to provide a device allowing the creation of said groups of staple strips in a completely automatic manner.

The essential features of the invention are as defined in the independent claim; one possible embodiment is composed of a pusher bringing two similar groups of staple strips onto a support member and an overturning device that, turning about a horizontally displaced axis with respect to the axis of symmetry of the two groups of strips, causes its own group, retained by an electromagnet, to mate with the group of the support member in a mirror but vertically offset relationship.

One of the advantages reached by the present invention essentially resides in its construction simplicity which makes it very efficient and reliable.

A further advantage is represented by the possibility of providing the presence of a package feeding device disposed downstream of the above apparatus so that the packing of staple strips can take place in a completely automatic manner which is very useful from the standpoint of both the economy and productiveness.

A still further advantage resides in that the apparatus in question allows a very precise performance while reducing the possibilities of damaging the staple strips.

The invention will be described hereinafter in more detail with reference to the accompanying drawings showing an embodiment thereof by way of a non-limiting example.

In the drawings

-Fig. 1 is a plan view of the apparatus for overturning and feeding strips of staples forming them in groups, according to the invention;
-Fig. 2 is a side view of the same apparatus;
-Figs. 3 and 4 are taken along the line III-III of Fig. 1 and show the essential steps of the apparatus in question.

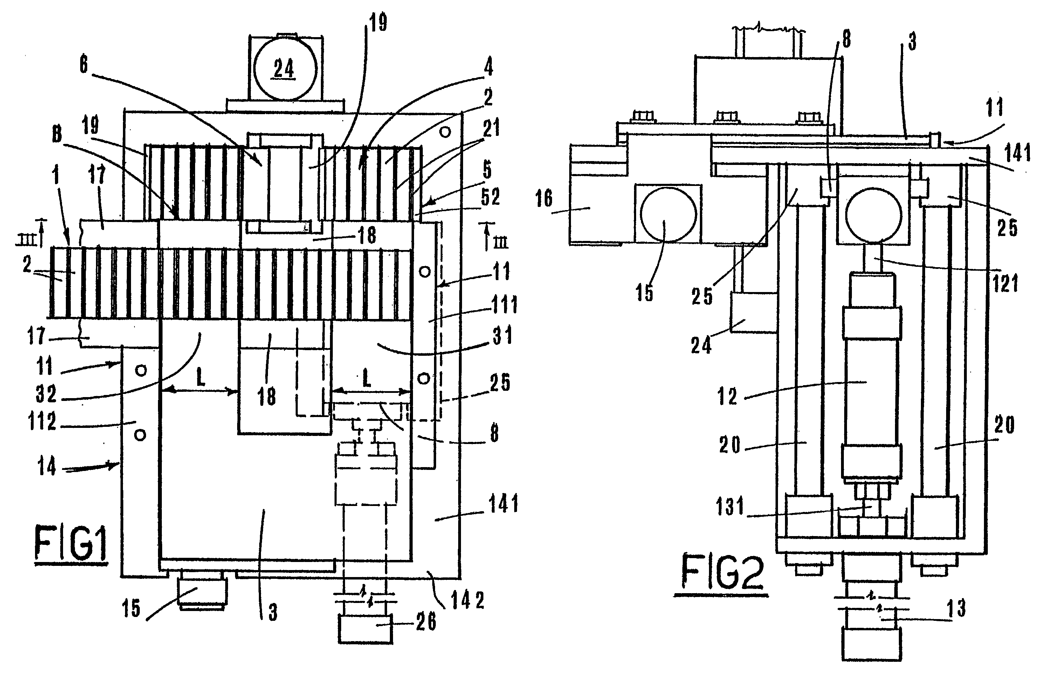

The apparatus according to the invention (see Fig. 1) consists of a feeder line 1, a pusher 3, a vertically movable support member 5, an overturning device 6 and an ejector 8 all supported by a framework 14.

The feeder line 1 is downwardly defined by a horizontal plate 141 being part of the supporting framework 14 and sideways by two parallel guides 17. Along the feeder line 1 strips of staples 2, hereinafter called strips, are continuously fed; they have the same length and are disposed at right angles to their feed direction along the feeder line 1. For reasons that will become more apparent in the following, the wings 21 of the strips 2 are all turned upwardly.

The pusher 3 supported by the plate 141 is of a U-shaped construction the arms 31 and 32 of which are parallel to the longitudinal directions of the strips 2, and is enclosed within two parallel guides 11 engaged with the plate 141. The arms 31 and 32 have an identical length L measured along the longitudinal direction of the feeder line 1 which length corresponds to a multiple of the width of one strip 2.

The guides 11 are offset with respect to each other along their longitudinal direction so that while one, referenced at 111, completely comes in contact with the feeder line 1, the other, referenced at 112, has its wall contacting the pusher 3 in alignment with the free ends of the guides 17. Said pusher 3 having the free ends of its arms 31 and 32 turned towards the feeder line 1, is moved by a fluid-actuated cylinder 15, through a connecting bracket 16; said cylinder is supported at its lower part and in a vertical alignment with the arm 32, for a reason to be described later, by the plate 141. By the action of the cylinder 15, the pusher 3 moves from a backward position in which the free ends of its arms 31 and 32 are aligned with the inner wall of the near guide (17 Fig. 1) to a forward position in which its arms 31 and 32 completely pass through the feeder line 1 and the free ends thereof are aligned at right angles to the close edge B of a rectangular hole 19 provided on plate 141.

At the opposite sides of the feeder line 1, between the arms 31 and 32 of the pusher 3 when in its forward position, two parallel guides 18 are provided which form two extensions for the guides 17 and are in engagement with the plate 141. The support member 5 and the overturning device 6 are housed within the hole 19 of the plate 141.

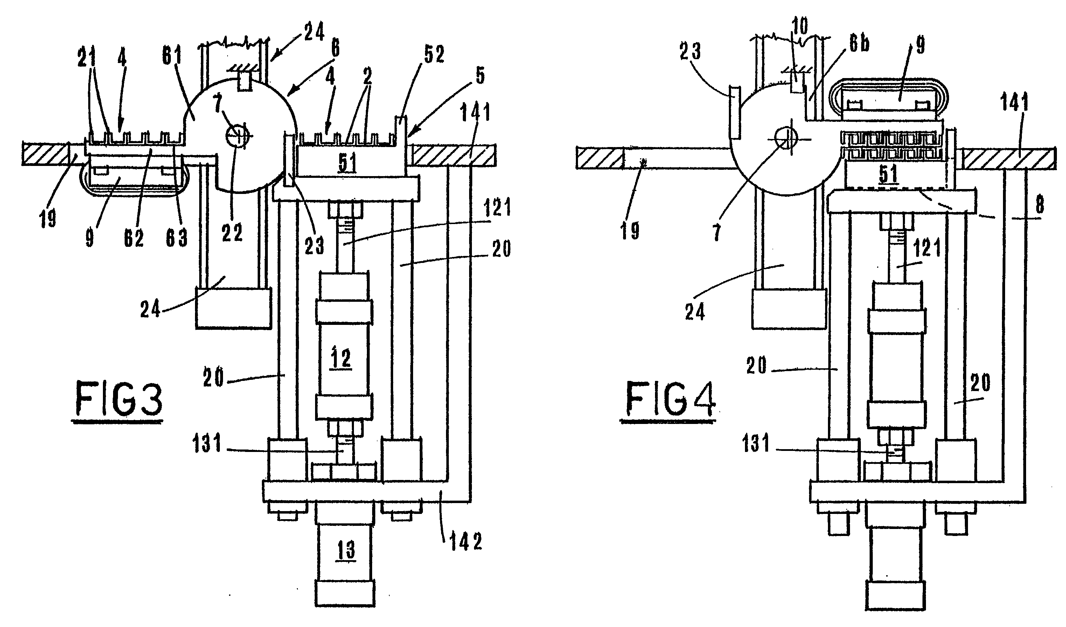

The support member 5 includes a horizontal plate 51 aligned with the arm 31 of the pusher 3 and in coplanar relation with the plate 141 (see Fig. 3 too) when the support member is in its upper position. The plate 51 is provided at the top with a limb 52 adapted to form an extension for the guide 111 in connection with the support member 5 and is engaged with the upper end of two vertical posts 20 slidably supported by a bracket 142 being part of the supporting framework 14. Also the free end of a vertical rod 121 acts on the plate 51 at the bottom thereof; said rod 121 is part of a fluid-actuated cylinder 12 in turn in engagement with the free end of the vertical rod 131 of a further fluid-actuated cylinder 13 connected to the bracket 142. The stroke of the rod 131 of the cylinder 13 is equal to the height of a group of strips 2, while the stroke of the rod 121 of the cylinder 12 is greater, for a reason to be described later.

The overturning device 6 essentially consists of a hub 61 rigidly mounted on a horizontal shaft 22 vertically offset relative to the axis of symmetry of the arms 31 and 32 of the pusher 3,and of a wing 62 of the hub 61 itself which is on top provided with a groove 63 in coplanar relation with the plate 141 and in alignment with the walls of the guides 17 and 18 adapted to contain the group 4 of strips 2 moved by the arm 32 of the pusher 3.

Means 9 adapted to retain the group 4 of strips 2 housed within the groove 63 is applied to the wing 62 on its side opposite said groove. As shown in Figs. 3 and 4, said means consists of a continuously energized electromagnet 9 which is interlocked, for the de-energizing thereof, to detection means 10. Should the strip 2 be of a non magnetic material, the retaining means 9 could consist of known suction means.

A flat surface 23 adapted to contain the group 4 of strips 2 pushed onto the support member 5 by the pusher 3 is fixed to the hub 61 on its side opposite the wing 62.

The axis 7 of the shaft 22 is provided to be on a level with the free ends of the wings 21 of the strips 2 disposed on the plate 51 of the support member 5 or on the wing 62 of the hub 61 being part of the overturning device 6. Provision is made for a means 24 acting on the shaft 22(see Fig. 1)and adapted to cause the latter to rotate so that the wing 62 is brought from its opening configuration as seen in Fig. 3 in which the groove 63 is in coplanar relation with the plate 51 of the support member 5, to the closing configuration seen in Fig. 4, in which the groove 63 parallel to and disposed over the plate 51 itself. By way of example only in the figures said means 24 consists of a fluid-actuated cylinder.

Said detection means 10 is in turn energized, and as a result the electromagnet 9 is de-energized, when the overturning device takes the configuration seen in Fig. 4. Said detection means may for example consist of a proximity sensor detecting the "vacuum" of the cavity 6b .

The ejector 8 (see Figs. 1 and 2) is provided to be disposed below the plate 141 and in alignment with the groups 4 of strips 2 supported by the plate 51 of the support member 5 when the latter is in its lowermost configuration, the rods 121 and 131 of the fluid-actuated cylinders 12 and 13 respectively being completely retracted. Practically the ejector 8 is a plane having the same height as two pairs of groups 4 of strips 2, which is supported by two side guide supports 25 connected at the bottom to plate 141. The ejector 8 is controlled by a fluid-actuated cylinder 26 so that it moves from a backward position, external to the vertical dimensions of the plate 51 of the support member 5, to a forward position in which said ejector 8 is past the plate 51 of the support member 5.

The operation of the apparatus according to the invention is the following.

We assume that an operating cycle is just over, that the feeder line 1 has been entirely occupied by the strips 2 (see Fig. 1), that the pusher 3 has reached its backward position as well as the ejector 8 (see Fig. 1 again), that the support member 5 has occupied its upper position, its plate 51 being in coplanar relation with the plate 141 of the supporting framework (14) (see Fig. 3), that the overturning device 6 has reached its opening position (see Figs. 1 and 3) and that the electromagnet 9 has been energized.

The cylinder 15 is now actuated and it causes the pusher 3 to move on towards its forward position: during its stroke the pusher 3 removes two similar groups of strips 2 from the feeder line 1 and transfers them onto the support member 5 and onto the overturning device 6 respectively.

Then the pusher 3 can return backward as far as the feeder line 1 is cleared off and is filled with strips 2 again; meanwhile the fluid-actuated cylinder 24 is operated, which causes the rotation of the overturning device 6 from its opening position to its closing position. Since the hub 61 of the overturning device 6 rotates about an axis 7 that is offset in relation to the axis of symmetry of the two arms 31 and 32 of the pusher 3 and therefore also offset with respect to the groups 4 of strips 2 moved by the latter, the wings 21 of the strips 2 of the two groups 4 are offsett too, so that they can be introduced into each other as shown in Fig. 4. While it is going to reach its closing position, the overturning device 6 energizes the detection means 10 that de-energizes the electromagnet 9. Subsequently the fluid-actuated cylinder 24 is operated in the opposite way relative to the preceding one so that it brings the overturning device 6 back to its opening position. The electromagnet 9 is actuated again after the overturning device 6 has moved away a certain amount from its closing position in order to avoid the separation of the just made up pair of groups 4 of strips 2. Meanwhile the fluid-actuated cylinder 13 is operated, which causes the plate 51 of the support member 5 to be lowered one step corresponding to the height of the just made up pair of groups 4 of strips 2, that is to the height of a strip 2 with the addition of the thickness of the base surface of the strip 2 itself. As soon as the overturning device 2 reaches its opening position, the pusher 3 will perform a new stroke in order to bring two further groups of strips 2 onto the support member 5, or better onto the supported pair of groups 4 of strips 2, and onto the overturning device 6 respectively. The overturning device 6 is brought again to its closing position and the pusher 3 to its backward position.

When the overturning device 6 has put down also this group 4 of strips 2 on the support member 5, the fluid-actuated cylinder 12 is operated, which causes the plate 51 of the support member 5 to be lowered to the utmost so that the two superposed pairs of groups 4 of strips 2 are brought into alignment with the ejector 8 (see Fig. 4 in which the ejector 8 is shown in a dotted line). While the overturning device 6 is reaching its opening position, the fluid-actuated cylinder 26 is operated, which causes the superposed pairs of groups 4 of strips 2 to be ejected from the support member 5.

A package feeding device could be provided in combination with this apparatus so that the ejector 8 would be able to insert the pairs of groups 4 of strips 2 directly into their respective packages.

Finally the two fluid-operated cylinders 12 and 13 are both operated so that the plate 51 of the support member 5 is returned to its raised position and a new operating cycle begins following the same procedures as hereinbefore.

A simplified embodiment of the invention with respect to the one described above is devoid of the ejector 8 the function of which is performed by the pusher 3; this one in fact, after bringing the second groups 4 of strips 2 onto the support member 5 and the overturning device 6, stops and moves further on past the support member 5 after the latter has reached its upper position again and the overturning device 6 has moved away therefrom and is no longer within the horizontal dimensions of the pusher 3 itself.

In the accompanying drawings is provided the introduction of two pairs of groups 4 of strips 2 but, should the introduction of one pair only take place, it would be sufficient to operate the fluid-actuated cylinders 12 and 13 always simultaneously. If, on the contrary, more than two pairs of groups 4 of strips 2 are provided for each package, it will be sufficient to equip the apparatus in question with many fluid-actuated cylinders 13 (or with multi-stroke drive means) depending upon the number of pairs of groups 4 for each package, and to lower the ejector 8 depending upon the lowermost position reached by the plate 51 of the support member 5.

## Claims

1. An apparatus for feeding individual strips of staples and overturning some of the strips to form them into groups, characterized in that it comprises:
   - a feeder line (1) for feeding the staple strips (2) disposed in a parallel side-by-side relationship at right angles to their feeding direction and with their wings (21) turned upwardly;
   - at least U-shaped pusher (3) provided with identical two arms (31, 32) horizontally movable parallel to the longitudinal axis of the strips of staples (2) between a backward position, in which the ends of its arms (31, 32) do not contact the staple strips (2) and a forward position in which its arms (31, 32) totally intercept said feeder line (1) in such a way to perpedicularly move away two identical groups (4) of staple strips (2) therefrom;
   - feed track means (17) bilaterally disposed with respect to said staple strip feeding line and feed track means (18) bilaterally provided in the region between said two arms (31, 32) and forming two extensions for said feed track means (17);
   - a support member (5) and an overturning device (6) for each pusher (3) each of them being adapted to receive one of the two groups (4) of staple strips (2) moved by the pusher (3) in its forward position, the overturning device (6) being provided with means (9) adapted to retain its own group (4) of staple strips (2) and being rotatably movable about a horizontal axis (7) horizontally displaced from the axis of symmetry of said two arms, between an opening position in which it is in coplanar relation with the support member (5) and receives a group (4) of staple strips (2) from the pusher (3) and a closing position in which it is in parallel relationship with the support member (5) itself being superposed thereon with its staple strips (2) offset with respect to the ones supported by said member so that the former can loosely mate with the latter;
   - at least one ejector (8) for each pusher (3) horizontally movable between a rest position where it is outside of the vertical dimensions of the latter, and an operating position in which it has completely transferred groups (4) of staple strips (2) from the support member (5) to the following operating station.

2. The apparatus according to claim 1, characterized in that said ejector (8) is the pusher (3) itself, the ends of the arms (31, 32) of which being moved past the support member (5) when the latter has come back to its upper position and the overturning device (6) has moved away from its closing position.

3. The apparatus according to claim 1 or 2, characterized in that said support member (5) is movable between an upper position in which it receives the first two groups (4) of staple strips (2) and a lower position in which said supported groups (4) of staple strips (2) are ejected, and in that said ejector (8) is horizontally movable when it is flush with the lower position reached by said two groups (4) of staple strips (2) carried by said support member (5).

4. The apparatus according to claim 3, characterized in that said support member (5) when vertically moving between its upper and lower positions reaches an intermediate position in which it receives two second groups (4) of said staple strips (2).

5. The apparatus according to claim 1, characterized in that said retaining means (9) of the overturning device (6) consists of an electromagnet de-energized by means (10) detecting the presence of said overturning device (6) in the closing position thereof, said electromagnet (9) being energized again when the overturning device (6) has considerably moved away from the support member (5).

6. The apparatus according to claim 1, characterized in that said retaining means (9) of the overturning device (6) consists of suction means that is de-energized by means (10) detecting the presence of said overturning device (6) in the closing position thereof, said suction means being energized again when the overturning device (6) has considerably moved away from the support member (5).

7. The apparatus according to claim 1, characterized in that said pusher (3) is slidable along a plane coplanar to the supporting plane of said feeder line (1) and the arms (31, 32) of the same are contained within side guides (11).

8. The apparatus according to claim 1, characterized in that said support member (5) is controlled by at least two fluid-actuated cylinders (12, 13) in a coaxial cascade relationship, at least one of them being provided for one-step displacement of said support member (5), the step being at least equal to the thickness of one group (4) of said staple strips (2) and the other being provided for the displacement of said support member (5) towards said lower position thereof.

## Revendications

1. Appareil d'alimentation de bandes individuelles d'agrafes et de renversement d'une partie de ces bandes pour la formation de groupes, caractérisé en ce qu'il comporte:
   - une ligne d'alimentation (1) pour alimenter les bandes d'agrafes (2) disposées parallèlement l'une à côté de l'autre, perpendiculairement à leur direction d'avance et avec leurs ailes (21) orientées vers le haut;
   - au moins un poussoir en forme de "U" (3) pourvu de deux branches identiques (31, 32), mobile horizontalement en direction parallèle à l'axe longitudinale des bandes d'agarafes (2) entre une position reculée, dans laquelle les extrémités de ses branches (31, 32) ne sont pas en contact avec les bandes d'agrafes (2) et une position avancée dans laquelle ses branches (31, 32) interceptent complètement ladite ligne d'alimentation (1) de manière à écarter perpendiculairement de celle-ci deux groupes identiques (4) de bandes d'agrafes (2);
   - des moyens de guidage de l'alimentation (17), disposés bilatéralement par rapport à ladite ligne d'alimentation de bandes d'agrafes et des moyens de guidage de l'alimentation (18) prévus bilatéralement dans la zone entre lesdites deux branches (31, 32) et formant deux prolongements desdits moyens de guidage (17);
   - un élément de support (5) et un dispositif de renversement (6) par chaque poussoir (3), chacun de ceux-ci étant destiné à recevoir l'un des deux groupes (4) de bandes d'agrafes (2) déplacés par le poussoir (3) dans sa position avancée, le dispositif de renversement (6) étant pourvu de moyens (9) destinés à retenir son propre groupe (4) de bandes d'agrafes (2) et étant mobile à rotation autour d'un axe horizontal (7) déplacé horizontalement de l'axe de symétrie desdites deux branches, entre une position d'ouverture dans laquelle il est coplanaire de l'élément de support (5) et recoit du poussoir (3) un groupe (4) de bandes d'agrafes (2) et une position de fermeture dans laquelle il est disposé parallèlement à l'élément de support (5) lui-même se trouvant superposé relativement à celui-ci, ses bandes d'agrafes (2) étant décalées par rapport à celles supportées par ledit élément (5) de manière que les premières peuvent épouser les dernières avec jeu;
   - au moins un éjecteur (8) par chaque poussoir (3), mobile horizontalement entre une position de repos dans laquelle il est à l'encombrement vertical de ce dernier, et une position de fonctionnement dans laquelle il a complètement transféré des groupes (4) de bandes d'agrafes (2) depuis l'élément de support (5) jusqu'au poste de travail suivant.

2. Appareil selon la revendication 1, caractérisé en ce que ledit éjecteur (8) c'est le poussoir (3) lui-même, les extrémités des branches (31, 32) de celui-ci étant déplacées au-delà de l'élément de support (5) quand ce dernier a regagné de nouveau sa position supérieure et le dispositif de renversement (6) s'est éloigné de sa position de fermeture.

3. Appareil selon la revendication 1 ou 2, caractérisé en ce que ledit élément de support (5) est mobile entre une position supérieure dans laquelle il recoit les premiers deux groupes (4) de bandes d'agrafes (2) et une position inférieure dans laquelle lesdits groupes supportés (4) de bandes d'agrafes (2) sont éjectés, et en ce que ledit éjecteur (8) est mobile horizontalement quand il est au ras de la position inférieure atteinte par lesdits deux groupes (4) de bandes d'agrafes (2) portés par ledit élément de support (5).

4. Appareil selon la revendication 3, caractérisé en ce que ledit élément de support (5), quand il se déplace verticalement entre ses positions supérieure et inférieure, atteint une position intermédiaire dans laquelle il recoit deux deuxièmes groupes (4) de bandes d'agrafes (2).

5. Appareil selon la revendication 1, caractérisé en ce que lesdits moyens de retenue (9) du dispositif de renversement (6) conportent un électro-aimant désactivé par des moyens (10) qui détectent la présence dudit dispositif de renversement (6) à sa position de fermeture, ledit électro-aimant (9) étant activé de nouveau quand le dispositif de renversement (6) s'est éloigné considérablement de l'élément de support (5).

6. Appareil selon la revendication 1, caractérisé en ce que lesdits moyens de retenue (9) du dispositif de renversement (6) comportent des moyens d'aspiration qui sont désactivés par des moyens (10) qui détectent la présence dudit dispositif de renversement (6) à sa position de fermeture, lesdits moyens d'aspiration étant activés de nouveau quand le dispositif de renversement (6) s'est éloigné considérablement de l'élément de support (5).

7. Appareil selon la revendication 1, caractérisé en ce que ledit poussoir (3) peut coulisser le long d'un plan coplanaire du plan de support de ladite ligne d'alimentation (1) et ses branches (31, 32) sont contenues dans des guidages latéraux (11).

8. Appareil selon la revendication 1, caractérisé en ce que ledit élément de support (5) est commandé par au moins deux cylindres actionnés par un fluide, disposés coaxiaux en cascade, l'un au moins de ces cylindres étant prévu pour le déplacement d'un pas dudit élément de support (5), le pas étant au moins égal à l'épaisseur d'un groupe (4) desdites bandes d'agrafes (2) et l'autre cylindre étant prévu pour le déplacement dudit élément de support (5) vers sa position inférieure précitée.

## Patentansprüche

1. Vorrichtung zum Wenden und Zuführen von Strips von Nieten zur Gruppenbildung, dadurch gekennzeichnet, dass sie wie folgt enthält:
   - eine Zuführungslinie (1) zum Zuführen von Metallklammerstrips (2), nebeneinanderliegend angeordnet im rechten Winkel im Verhältnis zu ihrer Vorschubrichtung mit ihren Flügeln (21) nach oben gedreht;
   - wenigstens ein U-förmiger Schieber (3), versehen mit zwei gleichen Armen (31, 32) und horizontal und parallel zu der Längsachse der Metallklammerstrips (2) zwischen einer zurückgezogenen Position, in der die Enden seiner Arme (31, 32) die Metallklammerstrips (2) nicht berühren, und einer vorgeschobenen Position beweglich, in der seine Arme (31, 32) vollkommen in die genannte Zuführungslinie (1) eingreifen, und zwar auf solche Weise, dass zwei gleiche Gruppen (4) von Metallklammerstrips (2) lotrecht entfernt von der Linie entfernt werden;

– Zuführmittel (17), die beiderseitig der genannten Zuführungslinie der Metallklammerstrips angeordnet sind, sowie Zuführmittel (18), die beiderseitig im Bereich zwischen den genannten beiden Armen (31, 32) vorgesehen sind und zwei Ausdehnungen für die genannten Zuführmittel (17) bilden;

– ein Tragelement (5) und eine Wendevorrichtung (6) für jeden Schieber (3), jede davon geeignet, eine der beiden Gruppen (4) der Metallklammerstrips (2) aufzunehmen, die durch den Schieber in die vorgeschobene Position gebracht worden sind, wobei die Wendevorrichtung (6) mit Mitteln (9) versehen ist, geeignet zum Zurückhalten der eigenen Gruppe (4) von Metallklammerstrips (2), und wobei sie um eine horizontale Achse (7) beweglich ist, horizontal von der symmetrischen Achse der beiden Arme versetzt, und zwar aus einer geöffneten Position, in der sie sich koplanar zu dem Tragelement (5) befindet und eine Gruppe (4) von Metallklammerstrips (2) von dem Schieber (3) übernimmt, in eine geschlossene Position, in der sie parallel zu dem Tragelement (5) selbst angeordnet ist, und zwar über diesem und mit ihren Metallklammerstrips (2) versetzt im Verhältnis zu den von dem genannten Element selbst gehaltenen, so dass erstere sie locker mit letzterem zusammensetzen kann;

– wenigstens einen Ausstosser (8) für jeden Schieber (3), der horizontale zwischen einer Ruhestellung, in der er sich ausserhalb der vertikalen Abmessungen letzteren befindet, in eine Arbeitsposition beweglich ist, in der er die Gruppe (4) von Metallklammerstrips (2) vollkommen von dem Tragelement (5) an die anschliessende Arbeitssituation weitergeleitet hat.

2. Vorrichtung nach Patentanspruch 1, dadurch gekennzeichnet, dass der genannte Ausstosser (8) von dem Schieber (3) selbst gebildet wird, wobei die Enden der Arme (31, 32) desselben über das Tragelement (5) hinaus bewegt wird, wenn letzteres in seine obere Position zurückkehrt und die Wendevorrichtung (6) sich aus ihrer geschlossenen Position fortbewegt hat.

3. Vorrichtung nach Patentanspruch 1 oder 2, dadurch gekennzeichnet, dass das genannte Tragelement (5) zwischen einer oberen Position, in der es die ersten beiden Gruppen (4) der Metallklammerstrips (2) erhält, und einer unteren Position beweglich ist, in der die genannte getragenen Gruppen (4) der Metallklammerstrips (2) ausgestossen werden, und dadurch, dass der genannte Ausstosser (8) horizontal beweglich ist, wenn er sich auf der Ebene der von den genannten beiden Gruppen (4) der Metallklammerstrips (2) erreichten unteren Position befindet, die von dem genannten Tragelement (5) zugeführt werden.

4. Vorrichtung nach Patentanspruch 3, dadurch gekennzeichnet, dass das genannte Tragelement (5), wenn es sich vertikal zwischen der oberen und der unteren Position bewegt, eine Zwischenposition erreicht, in der es zwei zweite Gruppen (4) der Metallklammerstrips (2) aufnimmt.

5. Vorrichtung nach Patentanspruch 1, dadurch gekennzeichnet, dass die genannten Halteelemente (9) der Wendevorrichtung (6) aus einem Elektromagneten besteht, der durch Mittel (10) entaktiviert wird, die das Vorhandensein der genannten Wendevorrichtung (6) in deren Schliessposition abtasten, wobei der genannte Elektromagnet (9) wieder aktiviert wird, wenn die Wendevorrichtung (6) erheblich von dem Tragelement (5) entfernt ist.

6. Vorrichtung nach Patentanspruch 1, dadurch gekennzeichnet, dass die genannten Halteelemente (9) der Wendevorrichtung (6) aus Saugmitteln bestehen, die durch Mittel (10) entaktiviert werden, welche das Vorhandensein der genannten Wendevorrichtung (6) in deren Schliessposition abtasten, wobei die genannten Saugmittel wieder aktiviert werden, wenn die Wendevorrichtung (6) erheblich von dem Tragelement (5) entfernt ist.

7. Vorrichtung nach Patentanspruch 1, dadurch gekennzeichnet, dass der genannte Schieber (3) entlang einer zur Tragebene der genannten Zuführungslinie (1) koplanaren Ebene gleitbar ist, und dass die Arme (31, 32) desselben in seitlichen Führungen (11) liegen.

8. Vorrichtung nach Patentanspruch 1, dadurch gekennzeichnet, dass das genannte Tragelement (5) wenigstens durch zwei koaxial kaskadenartig angeordnete strömungsdynamische Zylinder (12, 13) gesteuert wird, von denen wenigstens einer mit einer Schrittverschiebung für das genannte Tragelement (5) versehen ist, wobei der Schritt wenigstens der Dicke einer Gruppe (4) der genannten Metallklammerstrips (2) entsprechen und der andere zum Verschieben des genannten Tragelementes (5) in dessen untere Position vorgesehen sein soll.

FIG1

FIG2

EP 0 215 996 B1

FIG3

FIG4